# EUROPEAN PATENT APPLICATION

(11) **EP 4 563 824 A1**
(43) Date of publication of application: **04.06.2025**
(21) Application number: 23890078.1
(22) Date of filing: 24.04.2023
(51) Int. Cl.: F04D 25/08, F04D 27/00

(54) **FAN SYSTEM, INVERTER, AND CONTROL METHOD**

(30) Priority: 16.11.2022 CN 202211438481
(71) Applicant: Sungrow Power Supply Co., Ltd., Hefei, Anhui 230088 (CN)
(72) Inventor: XU, Anan, Hefei, Anhui 230088 (CN); OUYANG, Yao, Hefei, Anhui 230088 (CN); YU, Renbin, Hefei, Anhui 230088 (CN); ZHANG, Bing, Hefei, Anhui 230088 (CN)
(74) Representative: Rooney, John-Paul
(86) International application number: PCT/CN2023/090216
(87) International publication number: WO 2024/103634

(57) **Abstract**

A fan system, comprising a fan (100), a system controller (200), and a power supply module (300). The power supply module (300) is used for supplying power to the fan (100); a positive electrode and a negative electrode of the power supply module (300) are respectively connected to a positive electrode and a negative electrode of the fan (100); a first end of the system controller (200) is connected to a control end of the fan (100); the first end of the system controller (200) is used for sending a preset signal (Cont) to the control end of the fan (100), and the fan (100) rotates according to the preset signal (Cont); the preset signal (Cont) is used for controlling the rotation direction and the rotation speed of the fan (100); the rotation direction comprises forward rotation and reverse rotation; the preset signal (Cont) is a combination of one or more of the following: different frequency intervals correspond to different rotation directions, different voltage intervals correspond to different rotation directions, or different pulse number intervals correspond to different rotation directions. The control of forward rotation and reverse rotation of the fan can be achieved, and existing four-wire fans are compatible. The hardware architecture of the fan does not need to be changed, so that the cost is saved, and forward rotation and reverse rotation of the fan can be implemented. In addition, the present invention further relates to an inverter and a control method.

## Description

This application claims the priority to Chinese Patent Application No. 202211438481.5, titled "FAN SYSTEM, INVERTER, AND CONTROL METHOD", filed on November 16, 2022 with the China National Intellectual Property Administration, which is incorporated herein by reference in its entirety.

### FIELD

The present application relates to the technical field of fan control, and in particular to a fan system, an inverter and a control method.

### BACKGROUND

In the conventional technology, a fan supporting forward rotation and reverse rotation generally adopts a five-wire solution. In the five-wire solution, five wires includes a signal line for controlling forward rotation, a signal line for controlling reverse rotation, a power positive line, a power negative line, and a signal line for feeding back a rotational speed. The fan is controlled to rotate forward or reversely by receiving a forward rotation signal or a reverse rotation signal.

However, the five-wire solution is incompatible with a four-wire solution in the conventional technology. At present, the four-wire solution can only control a fan to rotate forward.

### SUMMARY

In view of this, a fan system, an inverter and a control method are provided according to the present application, which can control a fan to rotate forward and reversely and is incompatible with the conventional four-wire solution.

A fan system is provided according to the present application, which includes a fan, a system controller and a power supply module; where
the power supply module is configured to supply power to the fan, and a positive electrode and a negative electrode of the power supply module are respectively connected to a positive electrode and a negative electrode of the fan;
a first end of the system controller is connected to a control end of the fan;
the first end of the system controller is configured to send a preset signal to the control end of the fan, and the fan rotates based on the preset signal;
the preset signal is configured for controlling rotational directions and a rotational speed of the fan; the rotational directions include forward rotation and reverse rotation; and
the rotational directions of the fan are controlled based on at least one of the following: a frequency of the preset signal, a voltage of the preset signal, and the number of pulses of the preset signal, wherein different frequency ranges correspond to different rotational directions, different voltage ranges correspond to different rotational directions, or different pulse number ranges correspond to different rotational directions.

Preferably, different frequency ranges of the preset signal correspond to different rotational directions; and
the fan is configured to rotate forward in a case that the frequency of the preset signal is within a first frequency range, and rotate reversely in a case that the frequency of the preset signal is within a second frequency range; where frequencies of the first frequency range are different from frequencies of the second frequency range.

Preferably, the fan is further configured to alternately rotate forward and reversely in a case that the frequency of the preset signal is within a third frequency range; where frequencies of the third frequency range are different from the frequencies of the first frequency range, and are different from the frequencies of the second frequency range.

Preferably, different pulse number ranges of the preset signal correspond to different rotational directions; and
the fan is configured to rotate forward in a case that the number of pulses of the preset signal is within a first pulse number range, and rotate reversely in a case that the number of pulses of the preset signal is within a second pulse number range; where the numbers of pulses of the first pulse number range are different from the numbers of pulses of the second pulse number range.

Preferably, the fan is further configured to alternately rotate forward and reversely in a case that the number of pulses of the preset signal is within a third pulse number range; where the numbers of pulses of the third pulse number range are different from the numbers of pulses of the first pulse number range, and are different from the numbers of pulses of the second pulse number range.

Preferably, different voltage ranges of the preset signal correspond to different rotational directions; and
the fan is configured to rotate forward in a case that the voltage of the preset signal is within a first voltage range, and rotate reversely in a case that the voltage of the preset signal is within a second voltage range; where voltages of the first voltage range are different from voltages of the second voltage range.

Preferably, the fan is further configured to rotate based on different voltages in the first voltage range corresponding to different rotational speeds, and is configured to rotate based on different voltages in the second voltage range corresponding to different rotational speeds.

Preferably, the fan is further configured to alternately rotate forward and reversely in a case that the voltage of the preset signal is within a third voltage range; where voltages of the third voltage range are different from the voltages of the first voltage range, and are different from the voltages of the second voltage range.

Preferably, the fan system is located outside an inverter, the system controller is a controller of the inverter; and
the power supply module is an auxiliary power supply of the inverter.

Preferably, the system controller further includes a second end; the fan further includes a rotational speed detection end;
the second end is connected to the rotational speed detection end of the fan;
the fan first determines the rotational direction based on the preset signal, and determines the rotational speed based on the preset signal, and rotates based on the determined rotational speed; and
the second end of the system controller receives the rotational speed fed back by the rotational speed detection end.

An inverter is further provided according to the present application, which includes: an inverter circuit and a fan system.

A method for controlling a fan is further provided according to the present application, where a power positive port and a power negative port of the fan are respectively connected to a positive electrode and a negative electrode of a power supply module, and a control end of the fan is configured to connect a first end of a system controller; and
the method includes:
detecting a preset signal received by the control end; where the preset signal is configured for controlling rotational directions and a rotational speed of the fan; the rotational directions include forward rotation and reverse rotation; and the rotational directions of the fan are controlled based on at least one of the following: a frequency of the preset signal, a voltage of the preset signal, and the number of pulses of the preset signal, wherein different frequency ranges correspond to different rotational directions, different voltage ranges correspond to different rotational directions, or different pulse number ranges correspond to different rotational directions; and
rotating the fan based on the preset signal.

Preferably, different frequency ranges of the preset signal correspond to different rotational directions, and
the rotating the fan based on the preset signal includes:
rotating the fan forward in a case that the frequency of the preset signal is within a first frequency range; and
rotating the fan reversely in a case that the frequency of the preset signal is within a second frequency range;
where frequencies of the first frequency range are different from frequencies of the second frequency range.

Preferably, the method further includes: alternately rotating the fan forward and reversely in a case that the frequency of the preset signal is within a third frequency range; where frequencies of the third frequency range are different from the frequencies of the first frequency range, and are different from the frequencies of the second frequency range.

Preferably, the rotating the fan based on the preset signal includes:
rotating the fan forward in a case that the number of pulses of the preset signal is within a first pulse number range; and
rotating the fan reversely in a case that the number of pulses of the preset signal is within a second pulse number range; where
the first pulse number range is different from the second pulse number range.

Preferably, the method further includes: alternately rotating the fan forward and reversely in a case that the number of pulses of the preset signal is within a third pulse number range; where the numbers of pulses of the third pulse number range are different from the numbers of pulses of the first pulse number range, and are different from the numbers of pulses of the second pulse number range.

Preferably, the rotating the fan based on the preset signal includes:
rotating the fan forward in a case that the voltage of the preset signal is within a first voltage range; and
rotating the fan reversely in a case that the voltage of the preset signal is within a second voltage range; where
the first voltage range is different from the second voltage range.

Preferably, the method further includes: alternately rotating the fan forward and reversely in a case that the voltage of the preset signal is within a third voltage range; where voltages of the third voltage range are different from voltages of the first voltage range, and are different from voltages of the second voltage range.

Preferably, the fan further includes a rotational speed detection end;
the fan first determines the rotational direction based on the preset signal, and determines the rotational speed based on the preset signal, and rotates based on the determined rotational speed; and
the rotational speed detection end feeds back the rotational speed to a second end of the system controller.

It can be seen that the present application has the following beneficial effects.

According to the fan system provided by the present application, the fan can be controlled to rotate forward or reversely based on the frequency, electrical level and/or the number of pulses of the preset signal. The fan system is controlled by using the four-wire solution, has the same structure as a traditional fan, and has interfaces fully compatible with interfaces of the traditional fan. Therefore, the fan system is compatible with the traditional fan of the four-wire solution. The fan can determine whether to rotate forward or reversely by identifying the frequency, electrical level and/or the number of pulses of the preset signal through only one wire. The cost of the fan itself and the cost of the control system are not increased, and forward rotation control and reverse rotation control of the fan can be realized. According to the fan system provided by the present application, the hardware architecture of the fan does not need to be changed, thereby saving the cost and achieving various control of the fan, so that the functions of forward rotation and reverse rotation of the fan can be realized.

### BRIEF DESCRIPTION OF THE DRAWINGS

FIG. 1 is a schematic diagram of a fan system according to an embodiment of the present application;
FIG. 2A is a schematic diagram of a fan system according to another embodiment of the present application;
FIG. 2B is a flowchart of a control method according to an embodiment of the present application;
FIG. 3 is a flowchart of a control method according to another embodiment of the present application;
FIG. 4 is a flowchart of a control method according to another embodiment of the present application;
FIG. 5 is a flowchart of a control method according to another embodiment of the present application;
FIG. 6 is a flowchart of a control method according to another embodiment of the present application;
FIG. 7 is a schematic diagram of an inverter according to an embodiment of the present application; and
FIG. 8 is a flowchart of a method for controlling a fan according to an embodiment of the present application.

### DETAILED DESCRIPTION

In order to make the above object, features and advantages of the present application more apparent and easier to be understood, the embodiments of the present application are described in detail below in conjunction with the drawings and specific implementations.

The application scenarios of a fan are not specifically limited in the embodiments of the present application, and the fan can be applied to any scenario requiring heat dissipation, for example, applied to an inverter, where the fan is used to dissipate heat for the inverter. In addition, a fan system according to an embodiment of the present application can rotate reversely to remove dust, that is, automatic dust removal is achieved.

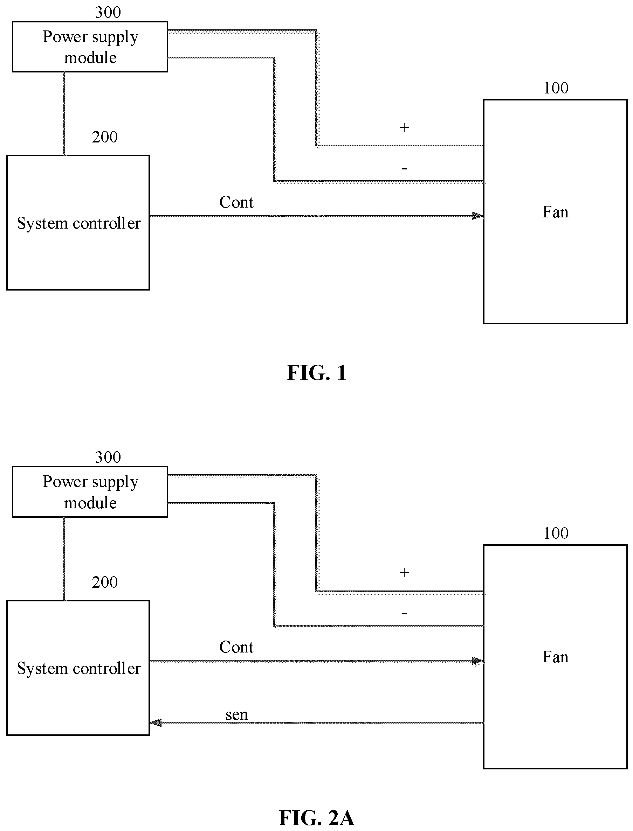

Reference is made to FIG. 1, which is a schematic diagram of a fan system according to an embodiment of the present application.

The fan system according to the embodiment includes: a fan 100, a system controller 200 and a power supply module 300.

The power supply module 300 is configured to supply power to the fan 100, and a positive electrode and a negative electrode of the power supply module 300 are respectively connected to a positive electrode and a negative electrode of the fan 100. That is, there are two power lines.

A first end of the system controller 200 is connected to a control end of the fan 100.

In another embodiment, the fan includes four wires, as shown in FIG. 2A. A second end of the system controller 200 is connected to a rotational speed detection end of the fan 100. It should be understood that, the fan 100 feeds back a current rotational speed to the system controller 200, and a feedback signal is represented by sen. The system controller 200 is configured to determine whether the rotational speed of the fan 100 reaches a controlled rotational speed based on the feedback signal sen, that is, whether the fan is properly controlled is determined.

The first end of the system controller 200 is configured to send a preset signal Cont to the control end of the fan 100, and the fan 100 rotates based on the preset signal Cont.

The preset signal Cont is configured for controlling rotational directions and a rotational speed of the fan 100. The rotational directions include forward rotation and reverse rotation.

The rotational directions of the fan are controlled based on at least one of the following: a frequency of the preset signal Cont, a voltage of the preset signal Cont, and the number of pulses of the preset signal Cont, where different frequency ranges correspond to different rotational directions, different voltage ranges correspond to different rotational directions, or different pulse number ranges correspond to different rotational directions.

It should be understood that the type of the preset signal for controlling forward rotation and reverse rotation of the fan is not specifically limited. The forward rotation and reverse rotation of the fan may be controlled based on a frequency of the preset signal, a voltage of the preset signal, or the number of pulses of the preset signal. In addition, the forward rotation and reverse rotation of the fan may also be controlled based on a combination of the frequency and the voltage. For example, different frequencies and different voltages indicate forward rotation, and different frequencies and same voltages indicate reverse rotation. The above are just examples, and other combinations of the frequency and the voltage may also be used to indicate forward rotation and reverse rotation. Similarly, other combinations of the frequency, the voltage, or the number of pulses may also be used to indicate forward rotation and reverse rotation, which is not described in detail here.

A size of each of the ranges is not specifically limited in the embodiment of the present application. The range may be a numerical interval or a numerical value. For example, different frequency ranges may be different frequencies, that is, a first frequency corresponds to forward rotation, and a second frequency band corresponds to reverse rotation, as long as the controller of the fan can accurately identify different frequencies corresponding to forward rotation and reverse rotation. Similarly, the principles of controlling forward rotation and reverse rotation based on the voltage ranges and the pulse number ranges are similar to that of controlling forward rotation and reverse rotation based on the frequency ranges, which is not repeated here.

The fan system according to the embodiment of the present application is compatible with the conventional four-wire solution, and can realize forward rotation control and reverse rotation control of the fan. The fan can determine whether to rotate forward or reversely by identifying the preset signal. The functions of forward rotation and reverse rotation of the fan are not specifically limited in the embodiment of the present application. For example, in a specific application, the fan rotates forward to dissipate heat and rotates reversely to remove dust.

According to the fan system provided by the embodiment of the present application, the hardware architecture of the fan is not required to be changed, thereby saving the cost, achieving various control of the fan, and achieving the functions of forward rotation and reverse rotation of the fan.

Several embodiments are described below.

### First Embodiment

Different frequency ranges of the preset signal correspond to different rotational directions.

The fan is specifically configured to rotate forward in a case that a frequency of the preset signal is within a first frequency range, and rotate reversely in a case that the frequency of the preset signal is within a second frequency range. Frequencies of the first frequency range are different from frequencies of the second frequency range. That is, the two frequency ranges do not overlap with each other.

In addition to two modes of forward rotation and reverse rotation, the fan may also alternately rotate forward and reversely. For example, the fan is further configured to alternately rotate forward and reversely in a case that the frequency of the preset signal is within a third frequency range. Frequencies of the third frequency range are different from the frequencies of the first frequency range, and are different from the frequencies of the second frequency range. That is, the three frequency ranges do not overlap with each other.

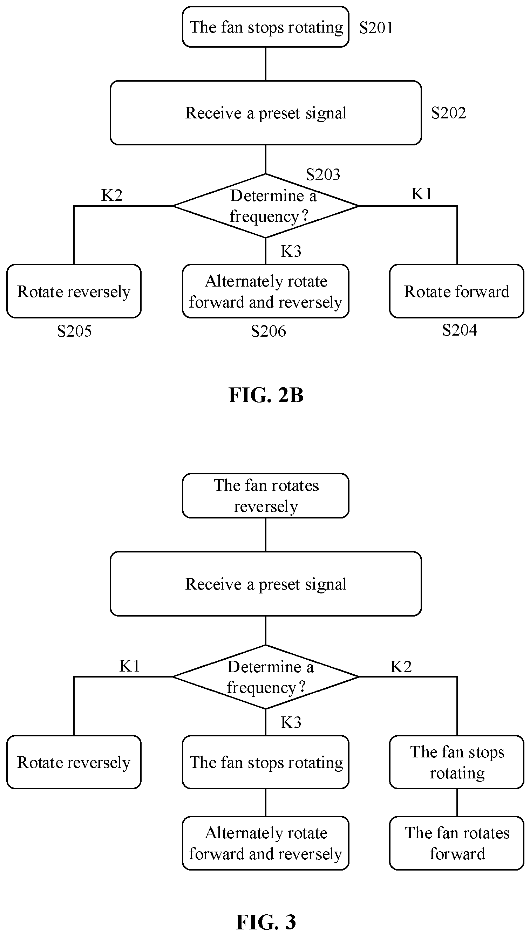

Reference is made to FIG 2B, which is a flowchart of a control method according to an embodiment of the present application.

In step S201, the fan stops rotating.

In step S202, a preset signal sent by the system controller is received.

In step S203, whether a frequency of the preset signal is within the first frequency range, the second frequency range, or the third frequency range is determined.

In step S204, if it is determined that the frequency of the preset signal is within the first frequency range K1, the fan rotates forward. In a case that the frequency of the received preset signal is within the first frequency range K1, the fan is switched to rotate forward.

In step S205, if it is determined that the frequency of the preset signal is within the second frequency range K2, the fan rotates reversely. In a case that the fan is in a stopped state and the frequency of the received preset signal is within the first frequency range K1, the fan is started to rotate reversely.

Alternatively, during the reverse rotation of the fan, in a case that the frequency of the received preset signal is within the first frequency range K1, the fan continues to rotate reversely; and in a case that the frequency of the received preset signal is within the second frequency range K2, the fan is switched to rotate forward, where the fan may be directly switched from reverse rotation to forward rotation, or may stop first and then be switched to rotate forward, as shown in FIG. 3.

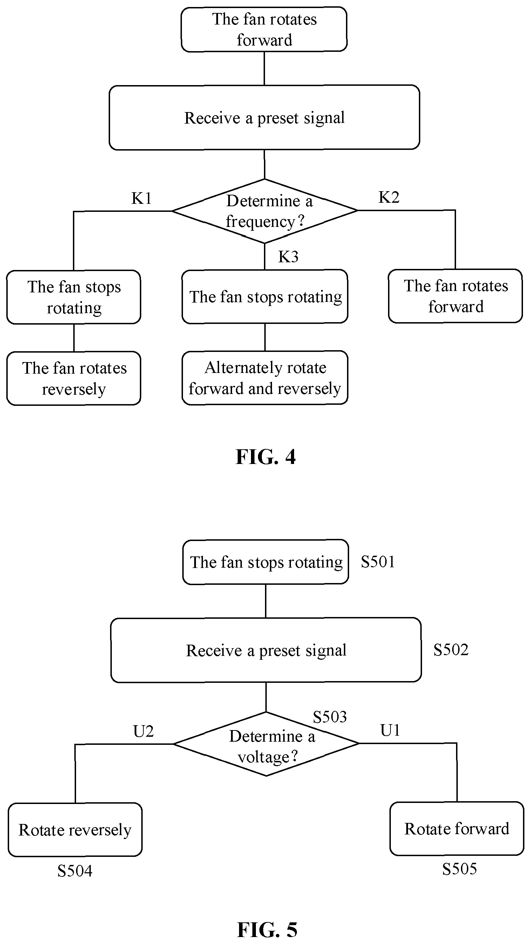

Alternatively, during the forward rotation of the fan, in a case that the frequency of the received preset signal is within the second frequency range K2, the fan continues to rotate forward; and in a case that the frequency of the received preset signal is within the first frequency range K1, the fan is switched to rotate reversely, where the fan may be directly switched from forward rotation to reverse rotation, or may stop first and then be switched to rotate reversely, as shown in FIG. 4.

In step S206, if it is determined that the frequency of the preset signal is within the third frequency range K3, the fan alternately rotates forward and reversely.

During the forward rotation or the reverse rotation of the fan, in a case that the frequency of the received preset signal is within the third frequency range K3, the fan is switched to alternately rotate forward and reversely, or, the fan may be switched to stop first and then be switched to alternately rotate forward and reversely.

It should be understood that, each of the first frequency range K1, the second frequency range K2 and the third frequency range K3 may be a frequency interval, the frequency interval includes a frequency band, or the frequency interval may include only one frequency point. That is, each of the first frequency range K1, the second frequency range K2 and the third frequency range K3 may be a fixed frequency or a frequency band, which is not limited here.

In addition, the system controller can control the rotational direction of the fan, and can also control the rotational speed of the fan. For example, the rotational speed of the fan is controlled based on different duty ratios in pulse width modulation (PWM) of K1, K2, and K3. That is, different duty ratios indicate different rotational speeds.

Specifically, the system controller may be a control chip. For example, the preset signal may be sent by a control chip such as a Digital Signal Processor (DSP), an ARM, and a Complex Programmable Logic Device (CPLD), or may be generated by other frequency generators.

### Second Embodiment

Different voltage ranges of the preset signal correspond to different rotational directions.

The fan is specifically configured to rotate forward in a case that a voltage of the preset signal is within a first voltage range, and rotate reversely in a case that the voltage of the preset signal is within a second voltage range. Voltages of the first voltage range are different from voltages of the second voltage range. That is, the two voltage ranges do not overlap with each other.

For example, a voltage range of the preset signal is from V0 to Vt, where V0 is greater than or equal to zero, Vt is less than or equal to a voltage Vcc of a power supply, and Vcc is a voltage supplied by the power supply module to the fan. The fan is controlled to rotate reversely in a case that the voltage of the preset signal is within a voltage range from V0 to Vc, where V0<Vc<Vt, and the fan is controlled to rotate forward in a case that the voltage of the preset signal is within a voltage range from Vc to Vt.

The fan is further configured to rotate at different rotational speeds corresponding to different voltages in the first voltage range, and is further configured to rotate at different rotational speeds corresponding to different voltages in the second voltage range. Different voltages in the voltage range indicate different rotational speeds, thereby realizing speed regulation of forward rotation or reverse rotation of the fan.

Reference is made to FIG. 5, which is a flowchart of a control method according to another embodiment of the present application.

In step S501, the fan stops rotating.

In step S502, the preset signal sent by the system controller is received.

In step S503, whether the voltage range of the preset signal is within the first voltage range or the second voltage range is determined.

In step S504, if it is determined that the voltage range of the preset signal is within the second voltage range represented by U2, the fan rotates reversely.

In step S205, if it is determined that the voltage range of the preset signal is within the first voltage range represented by U1, the fan rotates forward.

In the embodiment, the voltage range being a voltage interval is described as an example. The voltage range may also be a specific voltage value, for example, the voltage of 2V corresponds to forward rotation, and the voltage of 4V corresponds to reverse rotation, which is not specifically limited here. In a case that the forward rotation and the reverse rotation correspond to different specific voltage values, the rotational speed may be controlled based on different duty ratios.

In addition, the fan is further configured to alternately rotate forward and reversely in a case that the voltage of the preset signal is within a third voltage range. Voltages of the third voltage range are different from the voltages of the first voltage range, and are different from the voltages of the second voltage range.

### Third Embodiment

Different pulse number ranges of the preset signal correspond to different rotational directions.

The fan is specifically configured to rotate forward in a case that the number of pulses of the preset signal is within a first pulse number range, and rotate reversely in a case that the number of pulses of the preset signal is within a second pulse number range. The numbers of pulses of the first pulse number range are different from the numbers of pulses of the second pulse number range. That is, the two pulse number ranges do not overlap with each other.

In a case that the fan is in a stopped state, the system controller firstly sends out a number of pulses with a certain frequency before controlling the fan to rotate. If the number of pulses is N1, the fan starts to rotate reversely. If the number of pulses is N2, the fan starts to rotate forward. Each of N1 and N2 may be a fixed number or an interval, and values of N1 and N2 are different. If the fan has been rotated, whether the fan rotates forward or reversely is not determined based on the number of pulses.

In addition, the fan is further configured to alternately rotate forward and reversely in a case that the number of pulses of the preset signal is within a third pulse number range. The numbers of pulses of the third pulse number range are different from the numbers of pulses of the first pulse number range, and are different from the numbers of pulses of the second pulse number range.

A detailed description is given below in combination with the drawings.

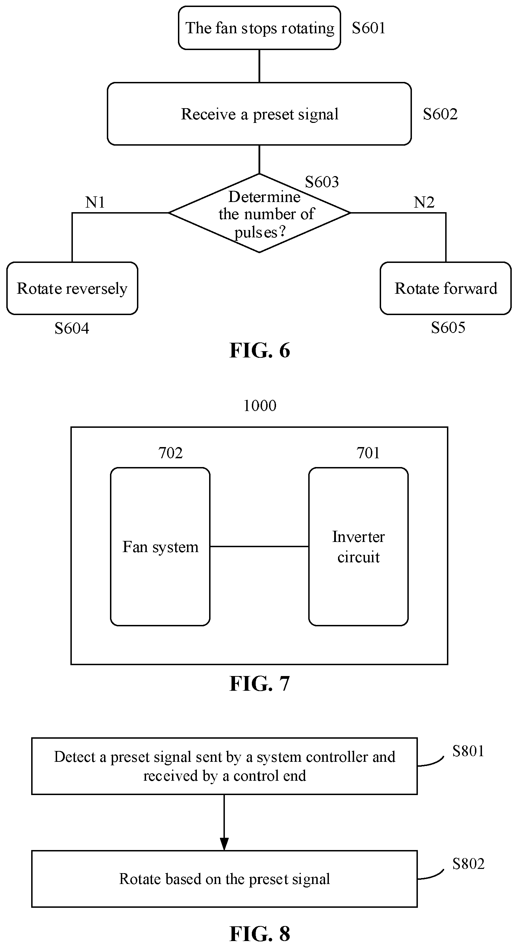

Reference is made to FIG. 6, which is a flowchart of a control method according to another embodiment of the present application.

In step S601, the fan stops rotating.

In step S602, the preset signal sent by the system controller is received.

In step S603, whether the number of pulses of the preset signal is within the first pulse number range or the second pulse number range is determined.

In step S604, if it is determined that the number of pulses of the preset signal is within the second pulse number range represented by N2, the fan rotates reversely.

In step S605, if it is determined that the number of pulses of the preset signal is within the first pulse number range represented by N2, the fan rotates forward.

In any of the above embodiments, different duty ratios of the preset signal correspond to different rotational speeds. The fan is further configured to determine the rotational direction based on the preset signal, and determine the rotational speed based on the duty ratio of the preset signal after the fan starts to rotate, and rotate based on the determined rotational speed. That is, the preset signal can be used to control the rotational direction and the rotational speed of the fan. For example, the rotational speed is determined based on the duty ratio of the preset signal, and the rotational speed is determined based on the duty ratio range of the preset signal from 0 to 100%. The adjustable range of the rotational speed is wide, and the rotational speed can be regulated in the full duty ratio range, so that the speed regulation accuracy is high.

In an embodiment, the fan system described above is located outside an inverter, the system controller is a controller of the inverter, and the power supply module is an auxiliary power supply of the inverter.

The specific functions of the forward rotation and the reverse rotation of the fan are not limited in the present application. For example, the fan rotates forward to dissipate heat for the inverter, and the fan rotates reversely to remove dust from the inverter, thereby saving the cost of manual dust removal and achieving automatic dust removal.

Based on the fan system according to the above embodiments, an inverter is further provided according to an embodiment of the present application, which is described in detail below in combination with the drawings.

Reference is made to FIG. 7, which is a schematic diagram of an inverter according to an embodiment of the present application.

The inverter 1000 according to the embodiment includes: an inverter circuit 701 and the fan system 702 described above.

The inverter according to the embodiment of the present application includes the fan system, and the system controller is a controller of the inverter. Since the system controller can control the forward rotation and the reverse rotation of the fan based on the four-wire solution, one pin of the system controller can be saved to release to release the function of the system controller. The system controller is able to control the fan with four pins.

Based on the fan system and the inverter according to the above embodiments, a method for controlling a fan is further provided according to an embodiment of the present application, which is described in detail below in conjunction with the drawings.

Reference is made to FIG. 8, which is a flowchart of a control method for a fan according to an embodiment of the present application.

According to the method for controlling a fan provided in the embodiment, a power positive port and a power negative port of the fan are respectively connected to a positive electrode and a negative electrode of the power supply module, the control end of the fan is configured to connect the first end of the system controller, and the rotational speed detection end of the fan is configured to connect the second end of the system controller.

The method includes following steps S801to S802.

In step S801, a preset signal sent by the system controller and received by the control end is detected. The preset signal is configured for controlling rotational directions and a rotational speed of the fan. The rotational directions include forward rotation and reverse rotation. The rotational directions of the fan are controlled based on at least one of the following: a frequency of the preset signal, a voltage of the preset signal, and the number of pulses of the preset signal, where different frequency ranges correspond to different rotational directions, different voltage ranges correspond to different rotational directions, or different pulse number ranges correspond to different rotational directions.

In step S802, the fan rotates based on the preset signal.

Different frequency ranges of the preset signal correspond to different rotational directions.

The fan rotates based on the preset signal, which is specifically performed by:
rotating forward in a case that the frequency of the preset signal is within a first frequency range; and
rotating reversely in a case that the frequency of the preset signal is within a second frequency range.

Frequencies of the first frequency range are different from frequencies of the second frequency range.

The method further includes: alternately rotating forward and reversely in a case that the frequency of the preset signal is within a third frequency range. Frequencies of the third frequency range are different from the frequencies of the first frequency range, and are different from the frequencies of the second frequency range.

The first frequency range, the second frequency range and the third frequency range are different from each other.

The fan rotates based on the preset signal, which is specifically performed by:
rotating forward in a case that the number of pulses of the preset signal is within a first pulse number range; and
rotating reversely in a case that the number of pulses of the preset signal is within a second pulse number range.

The first pulse number range is different from the second pulse number range.

The method further includes: alternately rotating forward and reversely in a case that the number of pulses of the preset signal is within a third pulse number range. The numbers of pulses of the third pulse number range are different from the numbers of pulses of the first pulse number range, and are different from the numbers of pulses of the second pulse number range.

The fan rotates based on the preset signal, which is specifically performed by:
rotating forward in a case that a voltage of the preset signal is within a first voltage range; and
rotating reversely in a case that the voltage of the preset signal is within a second voltage range.

The first voltage range is different from the second voltage range.

The method further includes: alternately rotating forward and reversely in a case that the voltage of the preset signal is within a third voltage range. Voltages of the third voltage range are different from voltages of the first voltage range, and are different from voltages of the second voltage range.

The method according to the embodiment further includes: determining the rotational direction based on the preset signal, determining the rotational speed based on the preset signal after the fan starts to rotate, and rotating based on the determined rotational speed. For example, the rotational speed is determined based on the duty ratio of the preset signal, and the rotational speed is determined based on the duty ratio range of the preset signal from 0 to 100%. The adjustable range of the rotational speed is wide, thereby achieving the rotational speed regulation in the full duty ratio range, and the rotational speed regulation accuracy is high.

The method according to the embodiment of the present application is compatible with the conventional four-wire solution, and can realize forward rotation control and reverse rotation control of the fan. The fan is able to determine whether to rotate forward or reversely by recognizing the preset signal. The functions of forward rotation and reverse rotation of the fan are not specifically limited in the embodiment of the present application. For example, in a specific application, the fan rotates forward to dissipate heat and rotates reversely to remove dust.

It should be noted that, the embodiments in the present application are described in a progressive manner, each of the embodiments focuses on its differences from the other embodiments, and the same and similar parts among the embodiments may be referred to each other. The system or device disclosed in the embodiments correspond to the method disclosed in the embodiments, and therefore is described in a relatively simple way, and reference may be made to the description of the method for relevant parts.

The disclosed embodiments are described above so that those skilled in the art can implement or use the present application. Various modifications to these embodiments are obvious for those skilled in the art. The general principles defined herein may be implemented in other embodiments without departing from the spirit or scope of the present application. Therefore, the present application is not limited to the embodiments illustrated herein, but should comply with the widest scope consistent with the principles and novel features disclosed herein.

## Claims

1. A fan system, comprising:
a fan;
a system controller; and
a power supply module; wherein
the power supply module is configured to supply power to the fan, and a positive electrode and a negative electrode of the power supply module are respectively connected to a positive electrode and a negative electrode of the fan;
a first end of the system controller is connected to a control end of the fan;
the first end of the system controller is configured to send a preset signal to the control end of the fan, and the fan rotates based on the preset signal;
the preset signal is configured for controlling rotational directions and a rotational speed of the fan, wherein the rotational directions comprise forward rotation and reverse rotation; and
the rotational directions of the fan are controlled based on at least one of the following: a frequency of the preset signal, a voltage of the preset signal, and the number of pulses of the preset signal, wherein different frequency ranges correspond to different rotational directions, different voltage ranges correspond to different rotational directions, or different pulse number ranges correspond to different rotational directions.

2. The fan system according to claim 1, wherein
different frequency ranges of the preset signal correspond to different rotational directions; and
the fan is configured to rotate forward in a case that the frequency of the preset signal is within a first frequency range, and rotate reversely in a case that the frequency of the preset signal is within a second frequency range; wherein frequencies of the first frequency range are different from frequencies of the second frequency range.

3. The fan system according to claim 2, wherein the fan is further configured to alternately rotate forward and reversely in a case that the frequency of the preset signal is within a third frequency range; wherein frequencies of the third frequency range are different from the frequencies of the first frequency range, and are different from the frequencies of the second frequency range.

4. The fan system according to claim 1, wherein different pulse number ranges of the preset signal correspond to different rotational directions; and
the fan is configured to rotate forward in a case that the number of pulses of the preset signal is within a first pulse number range, and rotate reversely in a case that the number of pulses of the preset signal is within a second pulse number range; wherein the numbers of pulses of the first pulse number range are different from the numbers of pulses of the second pulse number range.

5. The fan system according to claim 4, wherein the fan is further configured to alternately rotate forward and reversely in a case that the number of pulses of the preset signal is within a third pulse number range; wherein the numbers of pulses of the third pulse number range are different from the numbers of pulses of the first pulse number range, and are different from the numbers of pulses of the second pulse number range.

6. The fan system according to claim 1, wherein
different voltage ranges of the preset signal correspond to different rotational directions; and
the fan is configured to rotate forward in a case that the voltage of the preset signal is within a first voltage range, and rotate reversely in a case that the voltage of the preset signal is within a second voltage range; wherein voltages of the first voltage range are different from voltages of the second voltage range.

7. The fan system according to claim 6, wherein the fan is further configured to rotate based on different voltages in the first voltage range corresponding to different rotational speeds, and is further configured to rotate based on different voltages in the second voltage range corresponding to different rotational speeds.

8. The fan system according to claim 6 or 7, wherein the fan is further configured to alternately rotate forward and reversely in a case that the voltage of the preset signal is within a third voltage range; wherein voltages of the third voltage range are different from the voltages of the first voltage range, and are different from the voltages of the second voltage range.

9. The fan system according to any one of claims 1 to 7, wherein the fan system is located outside an inverter, and the system controller is a controller of the inverter; and
the power supply module is an auxiliary power supply of the inverter.

10. The fan system according to any one of claims 1 to 9, wherein
the system controller further comprises a second end, and the fan further comprises a rotational speed detection end;
the second end is connected to the rotational speed detection end of the fan;
the fan first determines the rotational direction based on the preset signal, and determines the rotational speed based on the preset signal, and rotates based on the determined rotational speed; and
the second end of the system controller receives the rotational speed fed back by the rotational speed detection end.

11. An inverter, comprising: an inverter circuit and the fan system according to any one of claims 1 to 10.

12. A method for controlling a fan, wherein a power positive port and a power negative port of the fan are respectively connected to a positive electrode and a negative electrode of a power supply module, and a control end of the fan is configured to connect a first end of a system controller; and
the method comprises:
detecting a preset signal received by the control end; wherein the preset signal is configured for controlling rotational directions and a rotational speed of the fan; the rotational directions comprise forward rotation and reverse rotation; and the rotational directions of the fan are controlled based on at least one of the following: a frequency of the preset signal, a voltage of the preset signal, and the number of pulses of the preset signal, wherein different frequency ranges correspond to different rotational directions, different voltage ranges correspond to different rotational directions, or different pulse number ranges correspond to different rotational directions; and
rotating the fan based on the preset signal.

13. The method according to claim 12, wherein
different frequency ranges of the preset signal correspond to different rotational directions; and
the rotating the fan based on the preset signal comprises:
rotating the fan forward in a case that the frequency of the preset signal is within a first frequency range; and
rotating the fan reversely in a case that the frequency of the preset signal is within a second frequency range; wherein
frequencies of the first frequency range are different from frequencies of the second frequency range.

14. The method according to claim 13, further comprising: alternately rotating the fan forward and reversely in a case that the frequency of the preset signal is within a third frequency range; wherein frequencies of the third frequency range are different from the frequencies of the first frequency range, and are different from the frequencies of the second frequency range.

15. The method according to claim 12, wherein the rotating the fan based on the preset signal comprises:
rotating the fan forward in a case that the number of pulses of the preset signal is within a first pulse number range; and
rotating the fan reversely in a case that the number of pulses of the preset signal is within a second pulse number range; wherein
the first pulse number range is different from the second pulse number range.

16. The method according to claim 15, further comprising: alternately rotating the fan forward and reversely in a case that the number of pulses of the preset signal is within a third pulse number range; wherein the numbers of pulses of the third pulse number range are different from the numbers of pulses of the first pulse number range, and are different from the numbers of pulses of the second pulse number range.

17. The method according to claim 12, wherein the rotating the fan based on the preset signal comprises:
rotating the fan forward in a case that the voltage of the preset signal is within a first voltage range; and
rotating the fan reversely in a case that the voltage of the preset signal is within a second voltage range; wherein
the first voltage range is different from the second voltage range.

18. The method according to claim 17, further comprising: alternately rotating the fan forward and reversely in a case that the voltage of the preset signal is within a third voltage range; wherein voltages of the third voltage range are different from voltages of the first voltage range, and are different from voltages of the second voltage range.

19. The method according to any one of claims 12 to 18, wherein
the fan further comprises a rotational speed detection end;
the fan first determines the rotational direction based on the preset signal, and determines the rotational speed based on the preset signal, and rotates based on the determined rotational speed; and
the rotational speed detection end feeds back the rotational speed to a second end of the system controller.
